# EUROPÄISCHE PATENTSCHRIFT

(11) **EP 1 128 198 B1**
(45) Veröffentlichungstag und Bekanntmachung des Hinweises auf die Patenterteilung: **13.06.2007**
(21) Anmeldenummer: 00810154.5
(22) Anmeldetag: 23.02.2000
(51) Int. Cl.: G02B 6/38

(54) **Steckerteil für eine kombinierte optische und elektrische Steckverbindung**
Combined electrical and optical connector
Connecteur hybrid optique et électrique

(43) Veröffentlichungstag der Anmeldung: 29.08.2001
(73) Patentinhaber: DIAMOND S.A., CH-6616 Losone-Locarno (CH)
(72) Erfinder: De Marchi, Silverio, 6612 Ascona (CH)
(74) Vertreter: Wenger, René

(56) Entgegenhaltungen:
- US-A- 4 081 208
- US-A- 4 427 879
- US-A- 5 419 717
- US-A- 5 461 688
- US-A- 5 675 682

## Beschreibung

Die Erfindung betrifft ein Steckerteil für eine kombinierte optische und elektrische Steckverbindung gemäss dem Oberbegriff von Anspruch 1.

Bei zahlreichen Komponenten der Übertragungstechnik ist es aus unterschiedlichen Gründen erforderlich, sowohl einen optischen, als auch einen elektrischen Leiter gleichzeitig anzuschliessen. Da an die Übertragung von Licht einerseits und von elektrischem Strom anderseits unterschiedliche Anforderungen gestellt werden, sind kombinierte Steckerteile relativ aufwendig herzustellen.

Ein gattungsmässig vergleichbarer Stecker wird in US 5,419,717 gezeigt. Der Stecker besteht aus einem SC-Steckerteil und einem separat ausgebildeten elektrischen Steckerteil, das im Bereich einer oberen Seitenwand des SC-Steckerteils aufgeschnappt ist. Zum Anschliessen dieses Steckers sind separate, korrespondierende Buchsenteile vorgesehen, die in einem Abstand zueinander angeordnet sind.

US 5,461,688 beschreibt eine kombinierte optische und elektrische Steckverbindung mit einem Steckerteil, dessen äusserer Gehäusemantel aus einem elektrisch leitfähigen Material besteht und einem zugehörigen Buchsenteil. Das Buchsenteil weist einen in einer Buchsenaufnahme angeordneten Kontaktstreifen zur Herstellung des elektrischen Kontakts mit dem Gehäusemantel auf. Der Kontaktstreifen steht in Kontakt mit einem an einer Aussenseite des Buchsengehäuses angeordneten elektrischen Leiter.

Weiter ist aus US 4,081,208 ein kombiniertes optisches und elektrisches Steckerteil bekannt. Auf einem Kabel mit einem Kern aus optischen Fasern und einer elektrischen Leitungshülle ist am vorderen Kabelende eine geschlitzte metallische Hülse angebracht. Die Hülse weist zur Herstellung eines elektrischen Kontakts einen an die Hülse angeformten, sich in Steckerlängsrichtung erstreckenden Bügel auf.

Es ist daher eine Aufgabe der Erfindung, ein Steckerteil der eingangs genannten Art zu schaffen, das einfach herzustellen ist und bei dem die optischen Übertragungseigenschaften bei einer einwandfreien elektrischen Kontaktaufnahme in keiner Weise beeinträchtigt werden. Insbesondere soll ein bereits vorhandenes Steckerteil für eine optische Steckverbindung mit wenigen Zusatzteilen nachrüstbar sein für eine kombinierte optische und elektrische Steckverbindung. Das Steckerteil soll sich besonders dafür eignen, einen elektrischen Stromkreis für die Erkennung und Signalisierung der gesteckten optischen Verbindungen aufzubauen.

Diese Aufgabe wird erfindungsgemäss mit einem Steckerteil gelöst, das die Merkmale im Anspruch 1 aufweist. Die Ausbildung des elektrischen Kontaktes als separates Kontaktelement, das auf der Aussenseite des Steckergehäuses gehalten ist, ermöglicht die Verwendung eines bestehenden Steckergehäuses für optische Steckverbindungen. Die Ausrichtung des Kontaktelements etwa parallel zur Mittelachse des Steckerstifts ermöglicht es, die Lage der Kontaktstelle des elektrischen Kontakts relativ zur Kontaktstelle des optischen Kontakts den besonderen Gegebenheiten anzupassen. Das Kontaktelement ist dabei als Kontaktstreifen ausgebildet, dessen kabelseitiges Ende in einem Knickschutz für das Kabel gehalten ist. Die elektrische Stromführung erfolgt dabei vollständig auf der Aussenseite des Steckergehäuses, ohne dass das Steckergehäuse eine Austrittsöffnung oder dergleichen für den elektrischen Leiter aufweisen muss. Der ohnehin an jedem Steckerteil erforderliche Knickschutz erhält auf einfachste Weise die zusätzliche Funktion eines Befestigungselements für den Kontaktstreifen.

Vorzugsweise ist das Kontaktelement von einem am Steckergehäuse fixierbaren Schutzelement umgeben. Damit ist gewährleistet, dass die elektrisch leitenden Teile weder vor noch nach dem Steckvorgang offenliegen. Das Schutzelement ist dabei auf besonders einfache Weise auf das Steckergehäuse aufschnappbar. Auf diese Weise wird das Kontaktelement zwischen dem Steckergehäuse und dem Schutzelement zusätzlich festgeklemmt.

Eine einfache Schnappverbindung ergibt sich dabei, wenn das Steckergehäuse am kabelseitigen Ende einen sich über wenigstens zwei Seiten erstreckenden Rastabschnitt aufweist und wenn das Schutzelement einen etwa U-förmigen Rastbügel aufweist, der auf den Rastabschnitt aufschnappbar ist. Rastabschnitte an optischen Steckerteilen sind bereits bekannt, beispielsweise um zwei Single-Stecker mit Hilfe eines aufschnappbaren Verbindungselements zu einem Duplex-Stecker zu verbinden.

Das Kontaktelement kann seitlich zusätzlich stabilisiert werden, wenn das Schutzelement im Abschnitt zwischen den beiden U-Schenkeln auf der dem Steckergehäuse zugewandten Seite eine Führungsnut aufweist. Die Führungsnut kann das Kontaktelement über seine gesamte Länge bzw. über einen Teil seiner Länge aufnehmen.

Zur einwandfreien elektrischen Kontaktaufnahme kann das Kontaktelement an dem der Steckerstirnseite zugewandten Ende eine federnde Abbiegung aufweisen. Das Kontaktelement ist dabei als Blattfeder ausgebildet, welche gegen die Kontaktebene vorgespannt ist.

Das Steckerteil ist besonders vorteilhaft mittels einer Krimphülse mit einem Lichtwellenleiterkabel verbunden, das wenigstens einen elektrischen Leiter enthält, wobei der elektrische Leiter über die Krimphülse hinausragt und mit dem Kontaktelement in Wirkverbindung steht. Die Krimphülse dient somit auch der Zugentlastung des elektrischen Leiters und dessen Kontaktnahme mit dem Kontaktelement erfolgt ohne Lötung oder dergleichen. Die Krimphülse ist über den gesamten Aussenmantel vom Knickschutz des Kabels umgeben, so dass eine elektrische Isolation gewährleistet ist.

Das Schutzelement weist ferner vorteilhaft einen im Querschnitt etwa U-förmigen Aufnahmeschacht zur Aufnahme einer mit dem Kontaktelement verbindbaren Kontaktzunge auf. Der Aufnahmeschacht schützt damit die Kontaktstelle auch im eingesteckten Zustand.

Bei einer mit einem erfindungsgemässen Steckerteil hergestellten Steckverbindung ist das Steckerteil vorzugsweise in ein Buchsenteil eingesteckt, wobei das Kontaktelement die Eintrittsöffnung des Buchsenteils teilweise überlappt. Der elektrische Kontakt wird damit in einem Bereich innerhalb des Buchsengehäuses geschlossen. Im Bereich der Eintrittsöffnung ist ferner wenigstens eine Aussparung angeordnet, welche ein teilweises eingreifen des Schutzelements in das Buchsengehäuse erlaubt. Das Buchsengehäuse ist im übrigen von gleicher Bauart, wie bei konventionellen optischen Steckverbindungen.

Der buchsenseitige elektrische Gegenkontakt könnte unmittelbar in das Buchsenteil integriert sein, beispielsweise in der Form einer Kontaktzunge, welche im Bereich der Eintrittsöffnung des Buchsenteils angeordnet ist. Alternativ kann das Buchsenteil aber auch derart auf einer Leiterplatine montiert sein, dass es einen Randabschnitt der Leiterplatine teilweise überragt, wobei im Bereich des Buchsenteils unter der Eintrittsöffnung bzw. unter der Aussparung im Bereich der Eintrittsöffnung eine Kontaktzunge an der Leiterplatine angeordnet ist. Der elektrische Gegenkontakt ist dabei vollständig vom Buchsenteil getrennt und der elektrische Kontakt wird zwischen Steckerteil und Platine hergestellt. Diese Bauweise ist besonders geeignet für ganze Steckermodule, die auf einer Platine montiert sind und die als Einschub an einer Gerätewand montiert werden können. Über den eletrischen Kontakt lässt sich feststellen, ob ein optischer Kontakt richtig gesteckt wurde. Selbstverständlich könnte der elektrische Kontakt aber auch anderen Zwecken dienen, beispielsweise der zusätzlichen Übertragung elektrischer Signale usw. Das erfindungsgemässe Steckerteil könnte auch mit einem Buchsenteil kombiniert werden, welches ein Element zum Senden und/oder Empfangen von Licht enthält.

Weitere Vorteile und Einzelmerkmale der Erfindung ergeben sich aus der nachstehenden Beschreibung eines Ausführungsbeispiels und aus den Zeichnungen. Es zeigen:
- Figur 1: eine perspektivische Darstellung einer optischen Steckverbindung vor der Endmontage des Steckerteils,
- Figur 1a: das Steckergehäuse des Steckerteils gemäss Figur 1 mit geöffnetem Schutzdeckel,
- Figur 2: die Anordnung gemäss Figur 1 aus einem anderen Blickwinkel,
- Figur 3: eine perspektivische Darstellung zwischen einem Buchsenteil und einem Steckerteil gemäss Figur 1, und
- Figur 4: einen Teilquerschnitt durch die optische Steckverbindung gemäss Figur 3, montiert auf einer Platine.

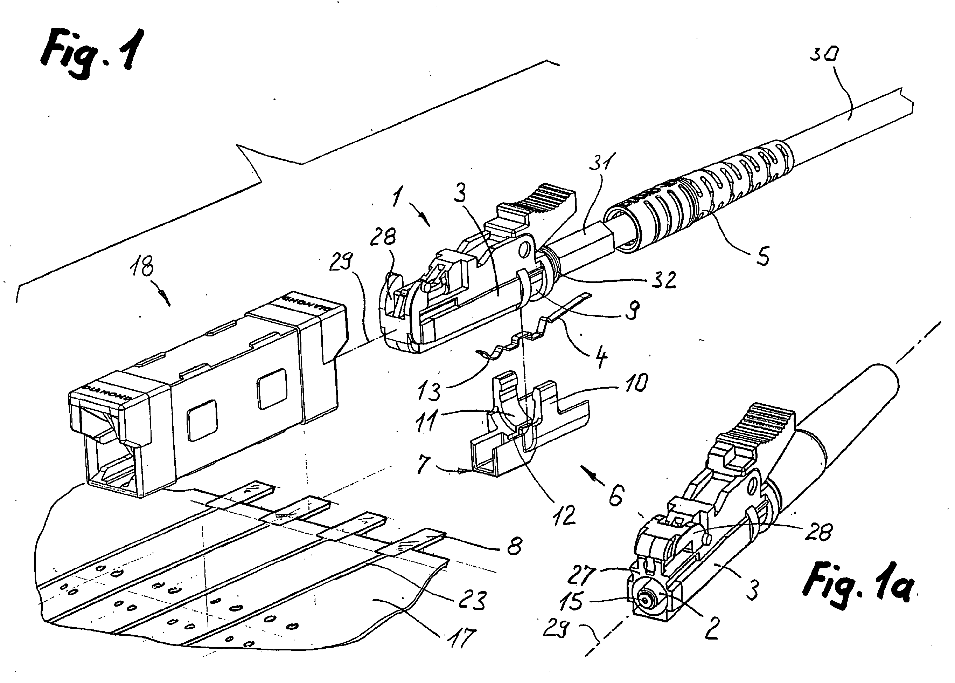

Wie in den Figuren 1 und 1a dargestellt, besteht ein Steckerteil 1 aus einem Steckergehäuse 3, in dem wenigstens ein Steckerstift 2 gehalten ist. Im Zentrum des Steckerstifts und an dessen Stirnseite ist der eigentliche Lichtwellenleiter 15 gehalten. Die Stirnseite 27 des Steckergehäuses 3 ist im ungesteckten Zustand mit einem Schutzdeckel 28 abgedeckt, welcher beim Einstekken in ein Buchsenteil 18 selbständig hochschwenkt und zurückgeschoben wird. Bezüglich Aufbau und Funktionsweise der optischen Steckverbindung wird auf die EP-A-893 718 verwiesen.

Das Steckerteil 1 ist an ein Kabel 30 angeschlossen, das neben dem eigentlichen Lichtwellenleiter auch noch wenigstens einen elektrischen Leiter enthält. Der Übergangsbereich des Kabels 30 zum Steckerteil 1 ist mit einem flexiblen Knickschutz 5 geschützt, der auf einen umlaufenden Kragen 32 aufgeschnappt werden kann. Ein polygonaler Ansatz 31 dient der Befestigung des Kabelmantels für die Zugentlastung, wie nachstehend noch genauer beschrieben wird.

Der elektrische Kontakt in der Steckverbindung wird über ein Kontaktelement 4 hergestellt, das im vorliegenden Fall als Metallstreifen ausgebildet ist. Das kabelseitige Ende des Streifens ist dabei so abgebogen, dass es durch die Schnappverbindung zwischen Kragen 32 und Knickschutz 5 in den Knickschutz eindringt und gleichzeitig von diesem fixiert wird. Das der Stekkerstirnseite zugewandte Ende des Kontaktelements 4 ist mit einer federnden Abbiegung 13 versehen, welche eine zuverlässige Kontaktaufnahme garantiert. Das Kontaktelement erstreckt sich in Steckerlängsrichtung etwa parallel zur Längsmittelachse 29 des Steckerstifts 2. Das Kontaktelement ist im übrigen zwischen seinen beiden Enden derart gebogen, dass es im wesentlichen der Aussenkontur des Steckergehäuses 3 folgt.

Zum Schutz des Kontaktelementes 4 ist ein Schutzelement 6 vorgesehen, das auf das Steckergehäuse 3 aufgeschnappt werden kann. Zu diesem Zweck ist das Schutzelement mit einem U-förmigen Rastbügel 10 versehen, der auf einen Rastabschnitt 9 aufgeschnappt werden kann. Das Schutzelement ist wie das Steckergehäuse vorzugsweise aus einem Kunststoffmaterial hergestellt. Im Mittelabschnitt 11 zwischen den beiden U-Schenkeln des Rastbügels 10 ist vorzugsweise eine Führungsnut 12 angeordnet, welche gerade genügend breit ist, um das Kontaktelement 4 aufzunehmen. Damit erhält das Kontaktelement genügend Seitenstabilität, um auch Querkräfte aufnehmen zu können. Die in Achsrichtung 29 gerichteten Kräfte beim Einsteckvorgang werden durch die entsprechenden Abwinklungen am Rastabschnitt 9 aufgenommen.

Das Schutzelement 6 ist ferner mit einem im Querschnitt etwa U-förmigen, gegen das Steckergehäuse 3 hin offenen Aufnahmeschacht 7 versehen. Dieser Schacht umgibt die Abbiegung 13 des Kontaktelements 4 in einem genügenden Abstand, um auch noch eine Kontaktzunge 8 eines Gegenkontakts aufnehmen zu können.

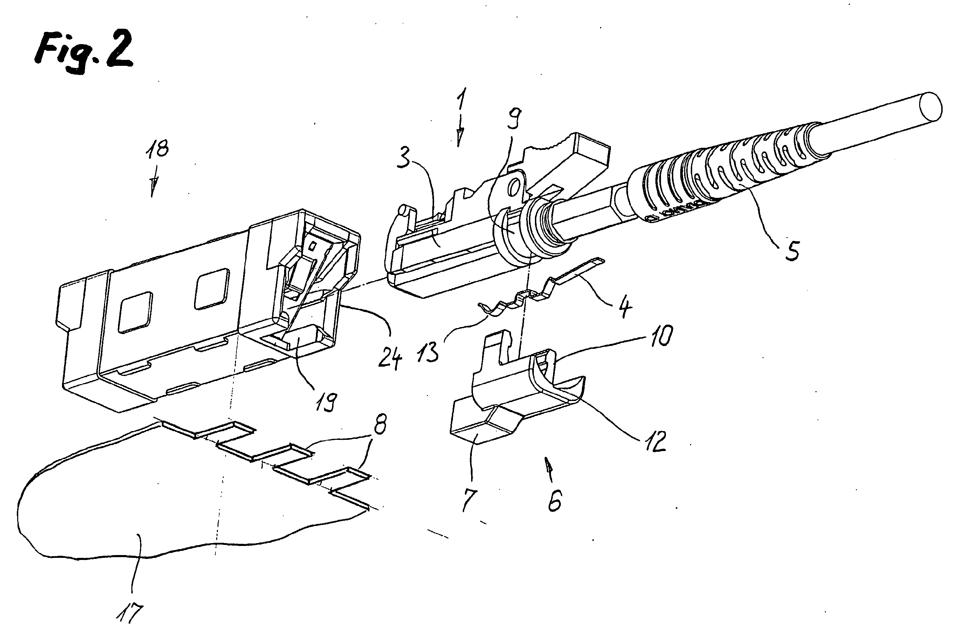

Wie aus Figur 2 hervorgeht, ist das Buchsenteil 18 im Bereich der Eintrittsöffnung 24 mit einer Aussparung 19 versehen. Diese Aussparung erlaubt ein Eingreifen des Aufnahmeschachts 7 in den Eintrittsbereich des Buchsenteils 18.

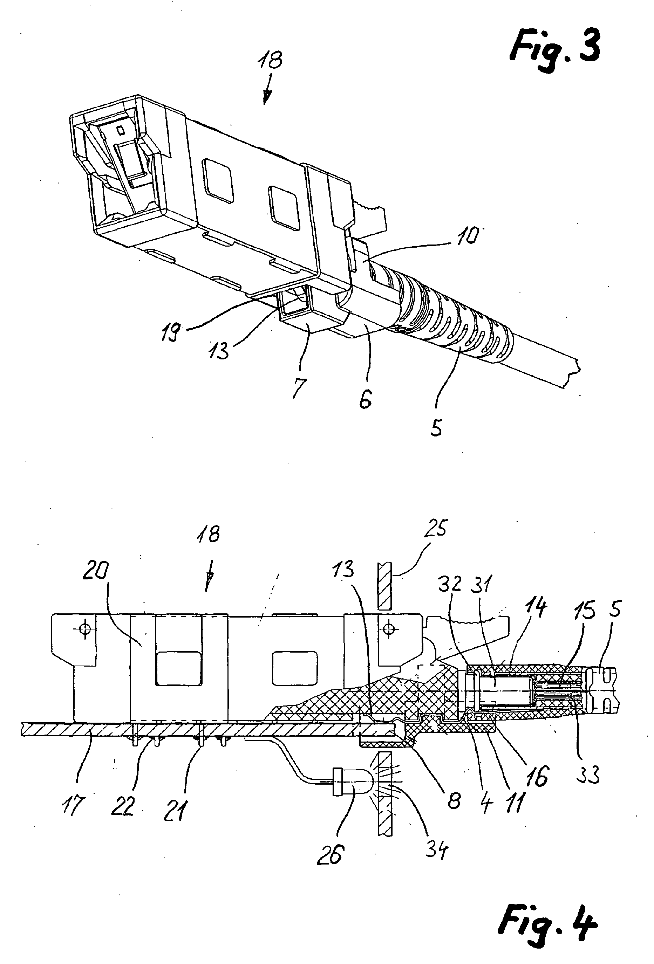

Das Buchsenteil ist im vorliegenden Fall dazu bestimmt, auf einer Platine 17 befestigt zu werden. Vorzugsweise werden dabei mehrere Buchsenteile unmittelbar nebeneinander angeordnet. Für die Befestigung dienen Haltebügel 20 (Figur 4), deren Füsse 21 an Lötstellen 22 befestigt werden können. Weitere Einzelheiten zu derartigen Haltebügeln oder zu alternativen Befestigungsarten sind beispielsweise aus der EP-A-974 854 ersichtlich.

Im Randbereich der Platine 17 sind in regelmässigen Abständen Kontaktzungen 8 angeordnet, zu denen je eine Leiterbahn 23 führt. Die Buchsenteile 18 werden derart auf der Platine 17 fixiert, dass die Aussparung 19 über einer Kontaktzunge 8 liegt. Der Eingriff des Aufnahmeschachts 7 in die Aussparung 19 am Buchsenteil 18 ist aus Figur 3 ersichtlich.

Figur 4 zeigt zudem noch Einzelheiten der Fixierung des Kabels. Zu diesem Zweck ist der in der Regel aus reissfesten Fasern bestehende Kabelmantel 33 mit Hilfe einer Krimphülse 14 zugfest mit dem Steckerteil bzw. mit dem polygonalen Ansatz 31 verbunden. Neben dem eigentlichen Lichtwellenleiter 15 enthält das Kabel auch einen elektrischen Leiter 16, der im Bereich der Krimphülse freigelegt ist und diese überragt bzw. im Bereich des Kragens 32 an dieser abgebogen ist. An dieser freigelegten Stelle berührt der elektrische Leiter 16 das Kontaktelement 4, wobei der Knickschutz 5 für eine ausreichend intensive Berührung sorgt.

Aus Figur 4 ist übrigens auch ersichtlich, dass der Mittelabschnitt 11 des Schutzelementes 6 den Bereich zwischen Knickschutz 5 und Steckergehäuse überlappt, so dass das Kontaktelement 4 an keiner einzigen Stelle freiliegt.

Schliesslich zeigt Figur 4 auch den elektrischen Kontakt zwischen der Kontaktzunge 8 und der Abbiegung 13, welche sich im eingesteckten Zustand federnd gegen die Kontaktzunge presst. Die Relativlage der elektrischen Kontaktaufnahme ist so gewählt, dass der elektrische Kontakt erst geschlossen wird, wenn die optische Steckverbindung hergestellt ist, d.h. wenn der Steckerstift seine Endposition im Buchsenteil erreicht hat und das Steckerteil zugfest im Buchsenteil einrastet. Beim Ausführungsbeispiel gemäss Figur 4 wird der elektrische Kontakt dazu benutzt, eine Leuchtdiode 26 zu aktivieren, welche hinter einer Öffnung 34 einer Gerätewand 25 angeordnet ist. Zusätzlich wird ein hier nicht näher dargestelltes Überwachungssystem angesteuert, welches überprüft, ob das richtige Steckerteil dem richtigen Buchsenteil zugeordnet ist und welches gegebenenfalls die Steckvorgänge protokolliert.

## Patentansprüche

1. Steckerteil (1) für eine kombinierte optische und elektrische Steckverbindung mit einem Knickschutz für ein Kabel und mit einem Steckergehäuse (3), in dem wenigstens ein Steckerstift (2) mit einem Lichtwellenleiter (15) gehalten ist und wenigstens einem elektrischen Kontakt, wobei der elektrische Kontakt als separates Kontaktelement (4) ausgebildet ist, das auf der Aussenseite des Steckergehäuses (3) gehalten ist und das sich in der Steckerlängsrichtung etwa parallel zur Mittelachse (29) des Steckerstifts (15) erstreckt, **dadurch gekennzeichnet, dass** das Kontaktelement (4) als Kontaktstreifen ausgebildet ist, dessen kabelseitiges Ende im Knickschutz (5) für das Kabel (30) gehalten ist.

2. Steckerteil nach Anspruch 1, **dadurch gekennzeichnet, dass** das Kontaktelement (4) von einem am Steckergehäuse (3) fixierbaren Schutzelement (6) umgeben ist.

3. Steckerteil nach Anspruch 2, **dadurch gekennzeichnet, dass** das Schutzelement (6) einen im Querschnitt etwa U-förmigen Aufnahmeschacht (7) zur Aufnahme einer mit dem Kontaktelement (4) verbindbaren Kontaktzunge (8) aufweist.

4. Steckerteil nach einem der Ansprüche 2 oder 3, **dadurch gekennzeichnet, dass** das Schutzelement (6) auf das Steckergehäuse (3) aufschnappbar ist.

5. Steckerteil nach Anspruch 4, **dadurch gekennzeichnet, dass** das Steckergehäuse (3) am kabelseitigen Ende einen sich über zwei Seiten erstreckenden Rastabschnitt (9) aufweist und dass das Schutzelement (6) einen etwa U-förmigen Rastbügel (10) aufweist, der auf den Rastabschnitt aufschnappbar ist.

6. Steckerteil nach Anspruch 5, **dadurch gekennzeichnet, dass** das Schutzelement (6) im Abschnitt (11) zwischen den beiden U-Schenkeln auf der dem Steckergehäuse zugewandten Seite eine Führungsnut (12) zum seitlichen Stabilisieren des Kontaktelements aufweist.

7. Steckerteil nach einem der Ansprüche 1 bis 6, **dadurch gekennzeichnet, dass** das Kontaktelement (4) am der Steckerstirnseite (27) zugewandten Ende eine federnde Abbiegung (13) aufweist.

8. Steckerteil nach einem der Ansprüche 1 bis 7, **dadurch gekennzeichnet, dass** das Steckerteil mittels einer Krimphülse (14) mit einem Kabel (30) verbunden ist, das wenigstens einen elektrischen Leiter (16) enthält und dass der elektrische Leiter über die Krimphülse hinausragt und mit dem Kontaktelement (4) in Wirkverbindung steht.

9. Steckverbindung mit einem Steckerteil nach einem der Ansprüche 1 bis 8, **dadurch gekennzeichnet, dass** das Steckerteil in ein Buchsenteil (18) eingesteckt ist, wobei das Kontaktelement (4) die Eintrittsöffnung (24) des Buchsenteils teilweise überlappt und dass im Bereich der Eintrittsöffnung wenigstens eine Aussparung (19) angeordnet ist.

10. Steckverbindung nach Anspruch 9, **dadurch gekennzeichnet, dass** das Buchsenteil (18) derart auf einer Leiterplatine (17) montiert ist, dass es einen Randabschnitt der Leiterplatine teilweise überragt, wobei im Bereich des Buchsenteils unter den Aussparungen (19) eine Kontaktzunge (8) an der Leiterplatine angeordnet ist.

## Claims

1. Plug part (1) for a combined optical and electrical plug-in connection having an anti-kink device for a cable and having a plug housing (3), in which at least one plug pin (2) with an optical waveguide (15) is held, and having at least one electrical contact, the electrical contact being in the form of a separate contact element (4), which is held on the outside of the plug housing (3) and extends in the longitudinal direction of the plug approximately parallel to the mid-axis (29) of the plug pin (15), **characterized in that** the contact element (4) is in the form of a contact strip, whose cable-side end is held in the anti-kink device (5) for the cable (30).

2. Plug part according to Claim 1, **characterized in that** the contact element (4) is surrounded by a protective element (6), which can be fixed to the plug housing (3).

3. Plug part according to Claim 2, **characterized in that** the protective element (6) has an accommodating shaft (7), which is approximately U-shaped in cross section, for accommodating a contact tongue (8), which can be connected to the contact element (4).

4. Plug part according to either of Claims 2 and 3, **characterized in that** the protective element (6) can be snapped onto the plug housing (3).

5. Plug part according to Claim 4, **characterized in that** the plug housing (3) has, at the cable-side end, a latching section (9), which extends over two sides, and **in that** the protective element (6) has an approximately U-shaped latching clip (10), which can be snapped onto the latching section.

6. Plug part according to Claim 5, **characterized in that** the protective element (6) has a guide groove (12) for laterally stabilizing the contact element in the section (11) between the two U limbs on the side facing the plug housing.

7. Plug part according to one of Claims 1 to 6, **characterized in that** the contact element (4) has a sprung bent-back portion (13) at the end facing the plug front side (27).

8. Plug part according to one of Claims 1 to 7, **characterized in that** the plug part is connected to a cable (30) by means of a crimping sleeve (14), which cable (30) contains at least one electrical conductor (16), and **in that** the electrical conductor protrudes beyond the crimping sleeve and is operatively connected to the contact element (4).

9. Plug-in connection having a plug part according to one of Claims 1 to 8, **characterized in that** the plug part is inserted into a socket part (18), the contact element (4) partially overlapping the inlet opening (24) of the socket part, and **in that** at least one cutout (19) is arranged in the region of the inlet opening.

10. Plug-in connection according to Claim 9, **characterized in that** the socket part (18) is mounted on a printed circuit board (17) such that it partially protrudes beyond an edge section of the printed circuit board, a contact tongue (8) being arranged on the printed circuit board in the region of the socket part beneath the cutouts (19).

## Revendications

1. Elément connecteur (1) pour une connexion optique et électrique combinée, comportant une anticoque pour un câble et un boîtier de connecteur (3) dans lequel est fixé au moins un élément connecteur (2) avec un guide d'ondes optique (15) et au moins un contact électrique, le contact électrique étant conçu comme un élément de contact séparé (4) qui est fixé sur le côté extérieur du boîtier de connecteur (3) et qui s'étend dans le sens longitudinal du connecteur à peu près parallèlement à l'axe médian (29) de la broche (15), **caractérisé en ce que** l'élément de contact (4) est conçu comme une bande de contact dont l'extrémité située côté câble est fixée dans l'anticoque (5) prévue pour le câble (30).

2. Elément connecteur selon la revendication 1, **caractérisé en ce que** l'élément de contact (4) est entouré par un élément de protection (6) apte à être fixé au boîtier de connecteur (3).

3. Elément connecteur selon la revendication 2, **caractérisé en ce que** l'élément de protection (6) comporte une cheminée de réception (7) à section transversale à peu près en U, pour recevoir une languette de contact (8) apte à être reliée à l'élément de contact (4).

4. Elément connecteur selon la revendication 2 ou 3, **caractérisé en ce que** l'élément de protection (6) est apte à être enclenché sur le boîtier de connecteur (3).

5. Elément connecteur selon la revendication 4, **caractérisé en ce que** le boîtier de connecteur (3) présente sur son extrémité située côté câble une partie d'enclenchement (9) qui s'étend sur deux côtés et **en ce que** l'élément de protection (6) comporte une bride d'enclenchement (10) à peu près en U qui est apte à être enclenchée sur la partie d'enclenchement.

6. Elément connecteur selon la revendication 5, **caractérisé en ce que** l'élément de protection (6) présente dans sa partie (11) située entre les deux branches en U, sur le côté tourné vers le boîtier de connecteur, une rainure de guidage (12) pour la stabilisation latérale de l'élément de contact.

7. Elément connecteur selon l'une des revendications 1 à 6, **caractérisé en ce que** l'élément de contact (4) présente sur son extrémité tournée vers le côté frontal (27) du connecteur une partie repliée à ressort (13).

8. Elément connecteur selon l'une des revendications 1 à 7, **caractérisé en ce qu'**il est relié à l'aide d'une douille de sertissage (14) à un câble (30) qui contient au moins un conducteur électrique (16), et **en ce que** le conducteur électrique dépasse de la douille de sertissage et est en relation fonctionnelle avec l'élément de contact (4).

9. Connexion enfichable comprenant un élément connecteur selon l'une des revendications 1 à 8, **caractérisée en ce que** l'élément connecteur est enfiché dans un élément formant alvéole (18), l'élément de contact (4) couvrant en partie l'ouverture d'entrée (24) de l'élément formant alvéole, et **en ce qu'**au moins un creux (19) est disposé dans la zone de l'ouverture d'entrée.

10. Connexion enfichable selon la revendication 9, **caractérisée en ce que** l'élément formant alvéole (18) est monté sur une platine de conducteurs (17) de manière à dépasser une partie du bord de ladite platine, une languette de contact (8) étant disposée sur la platine dans la zone de l'élément formant alvéole, sous les creux (19).
